# EUROPEAN PATENT APPLICATION

(11) **EP 2 077 152 A2**
(43) Date of publication of application: **08.07.2009**
(21) Application number: 07834984.2
(22) Date of filing: 23.08.2007
(51) Int. Cl.: B01J 23/86, B01J 37/04, C01B 3/16

(54) **CATALYST FOR VAPOUR CONVERSION OF CARBON MONOXIDE METHODS FOR THE PRODUCTION AND FOR THE USE THEREOF**

(30) Priority: 06.09.2006 RU 2006132151
(71) Applicant: INSTITUT KATALIZA IMENI G.K. BORESKOVA SIBIRSKOGO OTDELENIA ROSSIISKOI AKADEMII NAUK, Novosibirsk, 630090 (RU)
(72) Inventor: JURIEVA, Tamara Mikhailovna, Moscow, 113035 (RU); DEMESHKINA, Margarita Petrovna, Novosibirsk, 630090 (RU); KHASIN, Alexandr Alexandrovich, Moscow, 113035 (RU); MINJUKOVA, Tatyana Petrovna, Novosibirsk, 630090 (RU); PLYASOVA, Ljudmila Mikhailovna, Novosibirsk, 630090 (RU); BARONSKAYA, Natalya Alekseevna, Novosibirsk, 630117 (RU); LEBEDEVA, Marina Valerievna, Novosibirsk, 630132 (RU); REZNICHENKO, Irina Dmitrievna, Moscow, 115516 (RU); VOLCHATOV, Leonid Gennadievich, Angarsk, 665833 (RU); BOCHAROV, Alexandr Petrovich, Angarsk, 665830 (RU); TSELJUTINA, Marina Ivanovna, Angarsk, 665836 (RU); POSOKHOVA, Olga Mikhailovna, Angarsk, 665832 (RU); ANDREEVA, Tatyana Ivanovna, Angarsk, 665835 (RU)
(74) Representative: HOFFMANN EITLE
(86) International application number: PCT/RU2007/000470
(87) International publication number: WO 2008/030140

(57) **Abstract**

The invention relates to producing hydrogen by means of the vapour conversion of carbon monoxide and a catalyst for said process and can be used in different industries. The invention discloses an iron-chromium catalyst containing an iron-chromium hydroxyl compound phase having a goethite and/or hydrohematite structure, a method for the preparation thereof and a method for the use thereof in a process for the vapour conversion of carbon monoxide. The catalyst can also contain copper. The catalyst is obtainable by precipitating sodium and potassium, by means on solutions of carbonates or ammonia hydroxides, from solutions of mixture of iron 2+ and 3+ and chromium 3+ nitrates which are obtained by the oxidation-reduction interaction of metal iron, chromium 6+ compounds and nitric acid. A process for the vapour conversion of carbon monoxide using said catalyst according to the inventive method is carried out at a temperature greater than 250°C. Said invention makes it possible to produce a catalyst having low sulphur (equal to or less than 0.03 mass%) and chromium 6+ (equal to or less than 0.05 mass%) contents and exhibiting a high activity at temperatures of 350°C and less.

## Description

The inventions relates to a method of producing hydrogen by means of the vapour conversion of carbon monoxide and catalysts for said process and can be used in different industries.

A vapour conversion of carbon monoxide reaction is a step of the process for producing hydrogen from natural gas. A vapour conversion reaction of CO is exothermic, the conversion depth is determined by thermodynamic equilibrium, which is unambiguously associated with the temperature of the gas mixture at the catalyst layer. Conventionally, vapour conversion of carbon monoxide is implemented in two steps: in a range of temperatures (1) of 350 to 500°C based on an iron-chromium catalyst and (2) 190 to 300°C based on a copper-zinc-aluminum catalyst [Catalysts used in nitrogen industry. Edited by A. M. Alekseev. Cherkassy. NIITEkhim. 1979].

The most promising catalysts in step 1 of the process are currently catalysts based on iron-chromium and iron-chromium-copper compounds. The main requirements to them are: (1) a sulphur content not greater than 0.03 mass%, (2) a chromium 6+ content is not greater than 0.05 mass%, (3) the catalyst activity providing implementing the process at temperatures at the start of the layer less than 350°C, for example, at 320 to 330°C, (4) ecological safety of the preparation technology.
(1) The sulphur content in a catalyst is restrained in view of that under the conditions of a reaction medium the sulphur compounds present in the known catalysts in the form of sulphates are converted into gaseous H₂S and CS₂ and poison a copper-containing catalyst for low temperature vapour conversion of CO. To reduce the content of sulphur in the reaction gas before the beginning of exploitation, it is recommended to perform "the blowing-off" the catalyst from sulphur for 8-10 h (an operation greatly deteriorating the economic parameters of the process), however, complete removal of sulphur is not gained thereby [Purification of technical gases./ Edited by T. A. Semenova and I. L. Leites. Moscow, Khimiya, 1977, 488 p.]. The best method of reducing the content of sulphur is sure to use a feed containing no sulphur or containing a small amount of sulphur being reduced in the process of preparing the catalyst (precipitation, washing off the catalyst mass).
(2) Restraining the content of chromium 6+ compounds in a catalyst (not greater than 0.05 mass% - a current demand to an industrial catalyst) is dictated by the conditions of safe work when loading and unloading the catalyst into an apparatus and pollution hazard to the environment during storage and utilization of a spent catalyst.
(3) When using adiabatic apparatuses, the reduction of temperature at the start of a reactor layer provides reducing the gas stream temperature at the reactor outlet, and consequently, increasing the conversion depth of CO, for example, - to the residual content of CO 2-2.5 vol% and less.
(4) By the ecological safety of the preparation technology the minimum producing NO and NO₂ and sanitary absorption thereof, the absence of chromium 6+ and copper 2+ in effluences and the contents thereof within the regulations stipulated by the accepted sanitary standards is understood.

Known is a method of producing a catalyst for vapour conversion of carbon oxide (SU651838, B01J 37/04, 15.03.79) containing 7.2 mass% of Cr₂O₃, by mixing iron oxide Fe₂O₃ with chromic acid followed by molding, drying and backing.

Known is a method of producing a catalyst (SU 1790064, B01J 37/04, 20.05.96) characterized in additional introduction of magnetite Fe₃O₄ in an amount of 15-100% by mass of iron oxide.

The disadvantages of the two methods are relatively low activity of the catalysts obtainable by means thereof.

Known is a method of producing a catalyst (RU 2170615, B01J 23/881, 20.07.01) obtainable by mixing iron oxide with an aqueous solution of chromic acid and a manganese salt followed by formation of granules, drying and backing thereof. Before backing, compounds of Mg, or Ca, Nd or Pr are additionally introduced.

Known is a method of producing an iron-chromium catalyst (RU 2275963, B01J37/03, 10.05.06) by mixing chromic anhydride with iron compounds prepared by precipitating iron hydroxyl compound with solutions of ammonia or sodium carbonate from solutions of iron sulfates followed by washing off, molding and backing at 280-420°C. Using iron sulfate as a feed requires a lot of water and long time to remove sulphur. High content of chromium 6+ and relatively low activity of the catalyst are in the whole range of temperatures, particularly at temperatures below 350°C (cf. prototype disclosed in example 6) are also disadvantages. The variants of this invention suppose mixing chromic anhydride with iron hydroxyl compounds and backing the mixture at 50-200°C before molding the catalyst not allowing avoiding the above disadvantages, however, additionally resulting in great shrinkage of the catalyst in the course of using thereof.

Known is also an iron-chromium catalyst for conversion of carbon oxide with water vapour [RO 100112, B01J23/08, 14.08.1990] obtained by air warming at 250°C of the predecessor which is obtained by using solutions of nitrates of iron (III), chromium (III) and a suitable alkaline agent (a solution of ammonia, sodium hydroxide). Among the disadvantages of the catalyst are low activity and a high content of chromium 6+. A high content of Cr⁺⁶ is a consequence of air backing. Furthermore, using nitric acid salts as a feed results in high cost of a catalyst.

Improving the economic indicators in using containing no sulphur reagents is gained by producing nitrates under the technology of preparing a catalyst using cheap feed, for example, metal iron and chromic anhydride, by obtaining iron 2+ and 3+ and chromium 3+ nitrates by the oxidation-reduction interaction of metal iron, chromic anhydride and nitric acid.

The closest invention to the set forth invention is the invention [BG 62040, B01J23/702, 9.01.1999], which discloses a method of producing an iron-chromium-copper catalyst for vapour conversion of CO with high hydroxyl surface coating operating at 300-360°C. The catalyst is obtained by mixing CO₂-blowing solutions of ammonia and solutions of iron nitrates (III), chromium nitrates (III) and copper nitrate followed by drying and air backing at 350-450°C. Iron (III) and Cr (III) nitrates are obtained by dissolving waste metal iron and chromic anhydride in 23 mass% of nitric acid with air blowing-off at 40-60°C.

The disadvantages of the known catalyst are:
1. An impossibility to produce a catalyst containing chromium 6+ not greater than 0.05 mass% (current demands to industrial catalyst), inasmuch as the inventive catalyst is backed in the air at 350-450°C. At these temperatures in an oxygen-containing medium high oxidation rate of Cr³⁺ in Cr⁶⁺ is observed [T. V. Rode "Oxygen chromium compounds", the USSR AS Pub. House, Moscow, 1962].
2. The conditions set forth to produce iron and chromium nitrates (23 mass% acid, air and temperature of 40-60°C) provide the absence of releasing nitrogen oxides NO and NO₂ in the course of producing nitrates, but not the completeness of reduction of Cr⁶⁺ up to Cr³⁺. Unreduced chromium remains in the filtrate after releasing the catalyst mass from the suspension obtained by precipitation and passes into the effluents. The reduction completeness of chromium is not considered in the patent.
3. The narrow temperature range of catalyst operation - 300-360°C.

The invention solves the object of developing a catalyst having high activity in a vapour conversion reaction at temperature 250-350°C.

The present invention is aimed at providing a catalyst for vapour conversion of carbon monoxide containing an iron 3+ and chromium 3+ hydroxyl compound phase with a goethite (FeOOH, Pbnm (2/m 2/m 2/m), ICSD 28247, 6.1.1.2) and/or hydrohematite (FeO(_{1.5-0.5x})(OH)ₓ [E. Wolska, Zeitschr. Fur Kristallogr. V.154, N1/2, 1981, p. 69-71] structure.

The atom ratio of iron and chromium in said catalyst is greater than 1.

The catalyst can also contain more than 1.0 mass% of copper.

The catalyst containing one of the above hydroxide phases has activity in a vapour conversion reaction at temperatures of 250-350°C greatly exceeding the known analogs containing mainly a phase having a hematite α-Fe₂O₃ or magnetite Fe₃O₄ structure as illustrated by the examples given hereafter.

The present invention also provides a method of preparing a catalyst using as a feed metal iron or a composition containing metal iron, compounds of chromium 6+ or an aqueous solution thereof, compounds of copper 2+ or an aqueous solution thereof and a aqueous solution of nitric acid.

The inventive method of preparing a catalyst for conversion of carbon monoxide containing iron and chromium comprises steps: mixing metal iron or a metal iron-containing composition with a compound of chromium 6+ or an aqueous solution thereof and an aqueous solution of nitric acid having the initial concentration of 6.0-46 mass% at a temperature below 40°C; bubbling the obtained mixture with air at a temperature of 40-60°C, mixing the resulted solution and an aqueous solution of carbonate and/or ammonium hydroxide, and/or potassium, and/or sodium, water washing off the precipitate from the mother solution, precipitate filtration and drying. The method allows producing hydroxyl compounds having the above mentioned structures.

As a metal iron containing composition, cast iron or steel are used.

The mixture of compounds of iron, chromium and nitric acid is further added with compounds of Cu²⁺ or an aqueous solution thereof.

The steps of mixing the precipitate and graphite and molding or palletizing, as well as the steps of catalyst backing at a temperature of 150-250°C in the air stream and/or 150-450°C in the stream of inert gas, nitrogen and the mixture thereof and vapour can be additionally performed.

The concrete structure of obtainable compounds is determined by the preparation parameters, such as the feed mixing temperature, pH of the mother solution and some others. As a metal iron composition, metallurgical production goods, as well as waste iron or machine-building production run-off can be used, however, using grey cast iron is preferable. Grey cast iron has a low content of sulphur (really it is possible to reach the content of 0.02 mass%) and phosphorus. Carbon and silicon containing in cast iron do not deteriorate the catalyst characteristics, but can improve the moldability thereof. Manganese containing in cast iron can have a positive influence on the catalytic properties (so using manganese as a promoting additive is set forth in patents RU 2170615, B01J37/04, 20.07.01 and RU 2275963, B01J37/03, 10.05.06).

The present invention also provides a method of carrying out a process of vapour conversion of CO by using the aforesaid catalysts at temperatures greater than 250°C.

The advantages of the claimed catalyst are: a wide range of operating temperatures having high activity between 250 and 350°C, the content of sulphur not greater than 0.03 mass%; the content of chromium (VI) not greater than 0.05 mass%. The advantages of the method for preparing a catalyst are: no release of NO and NO₂; no chromium (VI) in effluences; fast washing off, good filterability of the precipitate. An advantage of the method of carrying out the process for vapour conversion of carbon monoxide is an opportunity to carry out the process in a wide range of temperatures. Including at a temperature at the layer start of the catalyst lower than for a conventional catalyst.

A possibility to prepare hydroxyl compounds having goethite and/or hydrohematite structures, as well as a possibility and efficiency of using thereof in a process of vapour conversion of CO is illustrated by examples.

The determination of hydroxyl compound structures and the difference thereof from a hydroxyl compound having the structure of lepidocrocite (γ-FeOOH, Amam 2/m 2/m 2/m), ICSD 27846, Dan's class. 6.1.2.2), as well as iron oxides having structures of hematite (Fe2O₃, R 3c (3 2/m), ICSD 64599, Dan's class. 4.3.1.2) and magnetite (Fe₃O₄, F d3m (4/m 3 2/m), given class 7.2.2.3) can be unambiguously carried out by the data of X-ray diffraction and IR-spectroscopy as illustrated by examples.

### Example 1. A catalyst having a composition of Fe_{0.9}Cr_{0.1} with a goethite structure.

In a reactor provided with a impeller agitator and a gas stream injector 9.26 g cast iron crumb containing iron 0.94 mass. parts, 1.62 g chromic anhydride CrO₃, 157 g water, 84.7 g 46 mass% aqueous solution of nitric acid are mixed and agitated at 35°C for 1.5 h, then air bubbling of the mixture is performed, the temperature is raised to 45 °C agitating intensively for 30 min. The resulted solution of nitrates is mixed with a 10% solution of sodium carbonate by feeding solutions of salts and a precipitator in two streams under continuous stirring into a buffer solution. In the course of precipitation pH (8.0-8.5) and temperature (68-70°C) are kept permanent. The precipitate is washed off by decantation. The catalyst mass is dried at 90 °C and backed in the stream of a mixture of nitrogen and vapour for 1 h at 250 °C.

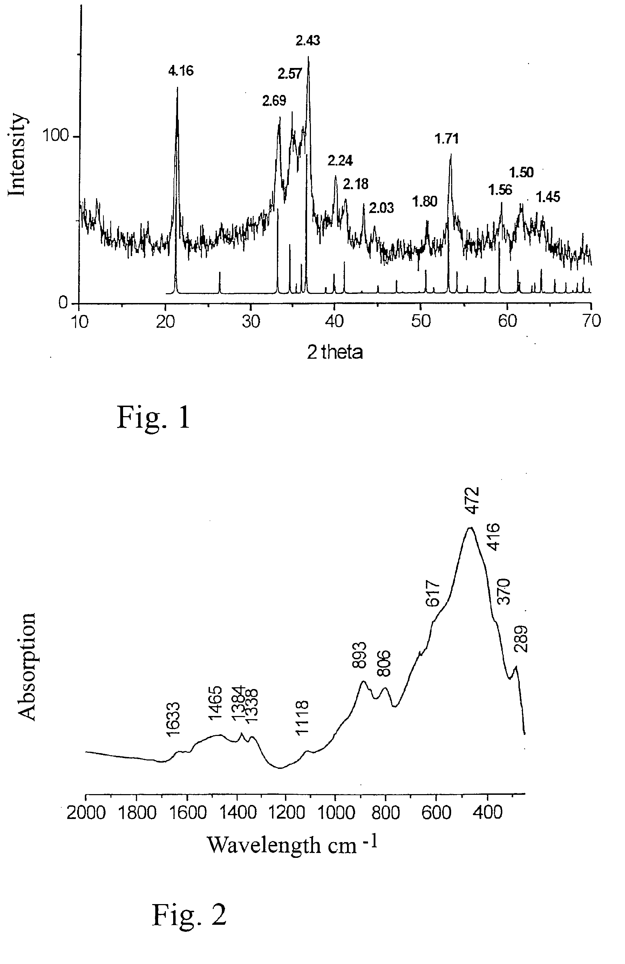

A difractogram of the catalyst obtained is presented in Fig. 1. A difractogram is obtained on a diffractometer D-500 (Siemens) in Cu-K_{α} radiation with a graphite monochromator in a reflected beam at voltage of 35 kV and strength of current of 35 mA. The registration of the diffraction picture is carried out with a scintillation counter by the scanning method with a pitch of 0.05 degrees 2Θ and accumulation time of 5 s at each point in the interval of angles 2Θ = 10-75 deg. The IR-spectrum of the resulted catalyst is given in Fig. 2. IR-spectrum is obtained in a range of 250-4000 cm⁻¹ by a Fourier spectrometer BomemMB-102. Samples are prepared by pressing into a KBr matrix.

In Fig. 1 the data of a simulative difractogram α-FeOOH (goethite) calculated according to ICSD 28247. The difractogram and IR-spectrum being observed testify that the resulted catalyst is a compound of Fe³⁺O(ON) and a goethite structure - orthorhombic syngony, a space group Pbnm (2/m 2/m 2/m), Dan's class. 6.1.1.2.

The characteristic data of the catalytic properties of the resulted catalyst are presented in the table.

### Example 2. A catalyst having a composition of Fe_{0.9}Cr_{0.1} and a hydrohematite structure.

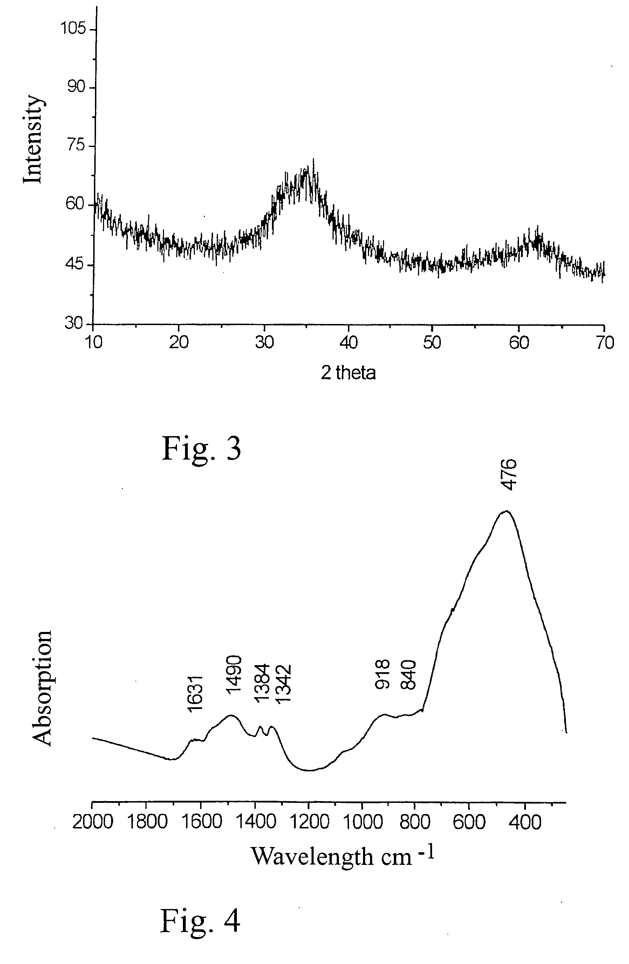

The catalyst is prepared similarly to example 1, however, mixing cast iron, chromic anhydride and an aqueous solution of nitric acid is carried out at 15°C for 2 h, air bubbling the mixture is performed at 55 °C, and precipitation - at pH 97.5-8.0. Backing the dry catalyst mass is performed at 350 °C. The resulted mass is added with 1 mass% of graphite and palletized in cylindrical tablets of 5 mm x 5 mm. The difractogram of the catalyst obtained before graphite is introduced therein is presented in Fig. 3. The IR-spectrum of the catalyst obtained is presented in Fig. 4.

The difractogram of the catalyst has thereon two wide reflexes at d about 2.7 Å and 2.5 Å characterizing the compound as a strongly disordered cubic structure phase. The IR-spectrum of the catalyst in the range of its specific oscillations is close to hydrohematite (E. Wolska, Zeitschr. Fur Kristallogr. V.154, N1/2, 1981, p. 69-71). The IR-spectrum contains an absorption band in a range of 920 cm⁻¹ which is distinctive for hydrohematites from α-Fe₂O₃ oxide, hematite. Additionally, the IR-spectrum contains absorption bands in a range of water fluctuations (3400 cm⁻¹ and 1630 cm⁻¹) and impurity anions CO₃ and NO₃ in a range of 1340-1540 cm⁻¹. The phase transition of the catalyst having a hydrohematite structure into the hematite structure is exothermic only in a range of temperatures 560-590°C. The catalyst backed at 600 °C in a nitrogen stream has a structure of well-crystallized hematite.

The characteristic data of the catalytic properties of the catalyst are presented in the table.

### Example 3. A catalyst having a composition of Fe_{0.89}Cr._{0.09}Cu_{0.02} and a hematite structure.

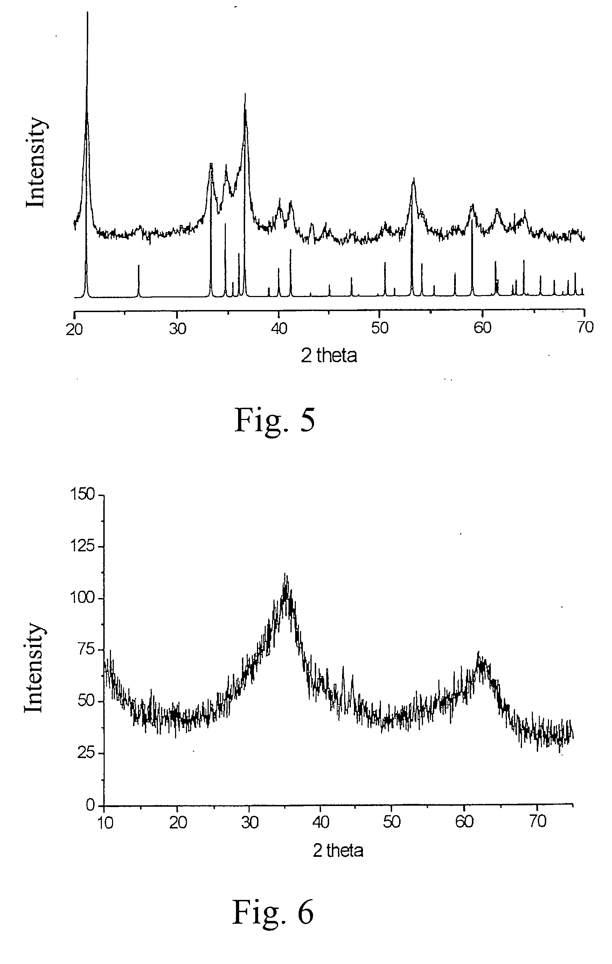

The catalyst is prepared similarly to example 1, however, the mixture of compounds of iron, chromium, and nitric acid is furthedr added with 0.35 g CuO and 2 g 15 mass% solution of nitric acid. The difractogram of the resulted catalyst is presented in Fig. 5.

In Fig. 5 the data of the simulative difractogram α-FeOOH (goethite) calculated according to ICSD 28247. The difractogram being observed testifies that the catalyst is a compound of Fe³⁺O(OH) and a goethite structure - orthorhombic syngony, a space group Pbnm (2/m 2/m 2m), Dan's class. 6.1.1.2.].

The characteristic data of the catalytic properties of the catalyst are presented in the table.

### Example 4. A catalyst having a composition of Fe_{0.89}Cr_{0.09}Cu_{0.02} and a hydrohematite structure.

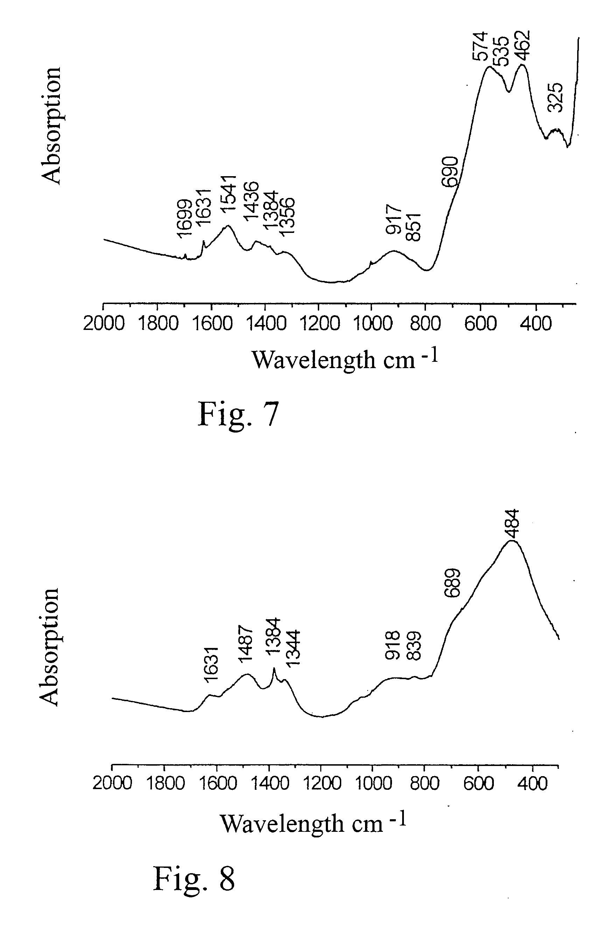

The catalyst is prepared according to example 2, however, as a metal iron-containing composition, steel grit in an amount of 8.8 g is used, and the mixture of compounds of iron, chromium and nitric acid is further added with 0.35 g CuO and 2 g 15 mass% nitric acid. The difractogram of the catalyst obtained before graphite is introduced therein is presented in Fig. 6. The IR-spectrum of the catalyst obtained is presented in Fig. 7.

The IR-spectrum of the resulted Fe-Cr-Cu catalyst in a range of its specific oscillations is close to hydrohematite (E. Wolska, Zeitschr. Fur Kristallogr. V.154, N1/2, 1981, p. 69-71). A band in a range of 920 cm⁻¹ which is observed in the hydrohematite spectra and differs thereof from hematite is well-marked. Additionally, the IR-spectrum contains absorption bands in a range of water fluctuations (3400 cm⁻¹ and 1630 cm⁻¹) and impurity anions CO₃ and NO₃ in a range of 1340-1540 cm⁻¹.

The characteristic data of the catalytic properties of the catalyst are presented in the table.

### Example 5. A catalyst having a composition of Fe_{0.73}Cr_{0.07}Cu_{0.2} and a hydrohematite structure.

The catalyst is prepared similarly to example 2, however, the mixture of compounds of iron, chromium and nitric acid is added with 4.2 g CuO and 24 g 15 mass% nitric acid. The IR-spectrum of the catalyst obtained is presented in Fig. 8.

The IR-spectrum of the resulted Fe-Cr-Cu catalyst in a range of its specific oscillations is closely corresponds to the hydrohematite spectrum (E. Wolska, Zeitschr. Fur Kristallogr. V.154, N1/2, 1981, p. 69-71). A band in a range of 920 cm⁻¹ which is observed in the hydrohematite spectra and differs thereof from hematite is well-marked. Additionally, the IR-spectrum contains absorption bands in a range of water fluctuations (3400 cm⁻¹ and 1630 cm⁻¹) and impurity anions CO₃ and NO₃ in a range of 1340-1540 cm⁻¹.

The characteristic data of the catalytic properties of the catalyst are presented in the table.

### Example 6 (to compare).

A catalyst having a composition of Fe_{0.9}Cr_{0.1} and a hematite structure.

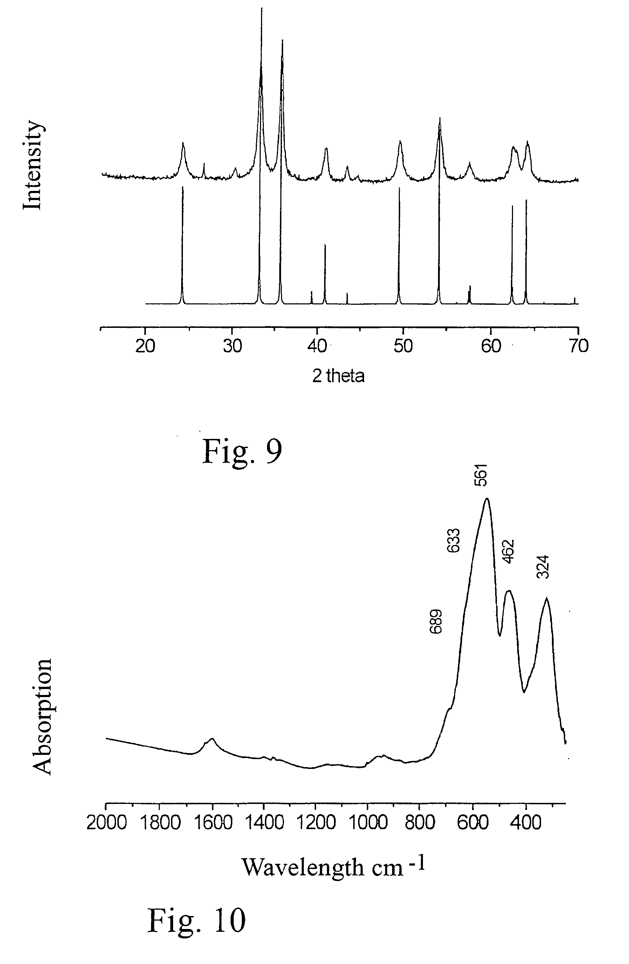

The catalyst is prepared according to the patent RU 2275963 by a series of steps (1) of precipitating iron compounds (II) from a solution of iron sulfate (II) with a mixture of solutions of sodium carbonate and hydroxide, (2) washing off the precipitate by decantation, (3) backing at 250°C, (4) sequential washing the backed mass by decantation and in the filter; (5) mixing the washed mass and chromic anhydride, (6) extrudate molding in diameter of 3 mm, (7) thermal treatment at a temperature of 350°C. The difractogram of the resulted catalyst is presented in Fig. 9. The IR-spectrum of the catalyst obtained is presented in Fig. 10. The data of simulative difractogram α-Fe₂O₃ (hematite) calculated according to ICSD 64599 are also given in Fig. 9.

The data presented in Fig. 9 and Fig. 10 testify that the resulted catalyst has a structure of α-Fe₂O₃ (hematite).

The characteristic data of the catalytic properties of the catalyst are presented in the table.

### Example 7 (to compare).

A catalyst having a composition of Fe_{0.89}Cr_{0.09}Cu_{0.02} and a hematite structure.

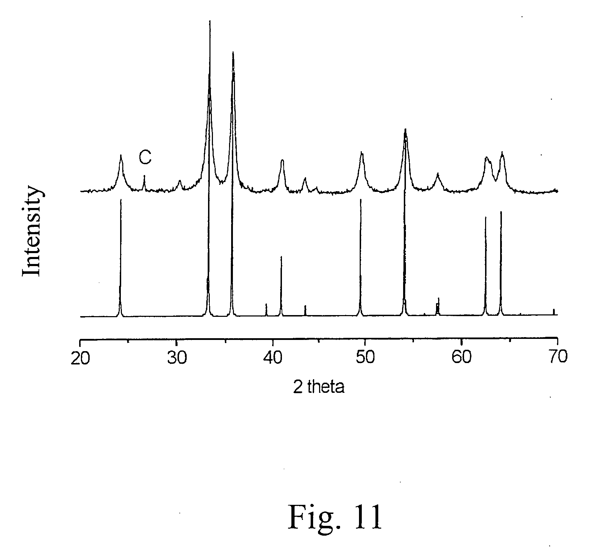

The catalyst is prepared according to the patent RU 2275963, similarly to example 6, however, the precipitation is carried out from a mixture of solutions of iron sulfate (II) and copper sulfate (II) in the ratios corresponding to the catalyst composition; to facilitate molding, graphite is added to the catalyst. The difractogram of the resulted catalyst is presented in Fig. 11. The data presented in Fig. 11 testify that the resulted catalyst has a structure of α-Fe₂O₃ (hematite).

The characteristic data of the catalytic properties of the catalyst are presented in the table. **Table.**

The reaction rate constants of vapour conversion of CO for catalysts fractions 0.25-0.5 mm. The compound of dry gas mixture, vol.%: CO - 9.6, CO₂ - 7.9, H₂ - 82.5. The vapour : gas ratio is 0.8. Activation of the catalysts is preformed in to steps: (1) raising the temperature up to 200°C in a nitrogen stream; (2) raising the temperature up to 300-320 °C in a stream of wet reaction mixture.

| | Rate constant, s⁻¹ | | |
|---|---|---|---|
| Temperature, °C | 300 | 330 | 450 |
| Example 1 | 1.8 | 3.9 | 56 |
| Example 2 | 2.2 | 5.5 | 62 |
| Example 3 | 4 | 17 | 73 |
| Example 4 | 14 | 24 | 127 |
| Example 5 | 18 | 38 | 92 |
| Example 6 (to compare) | 0.2 | 1.0 | 21 |
| Example 7 (to compare) | 1.0 | 2.2 | 60 |

## Claims

1. Catalyst for vapour conversion of carbon monoxide containing iron and chromium, **characterized in that** said catalyst contains an iron-chromium hydroxyl compound phase having a goethite and/or hydrohematite structure.

2. Catalyst according to claim 1 **characterized in that** the atom ratio of iron and chromium in said catalyst is greater than 1.

3. Catalyst according to claim 1 **characterized in that** said catalyst further contains greater than 1.0 mass% copper.

4. A method for preparing a catalyst for vapour conversion of carbon monoxide containing iron and chromium using metal iron **characterized in that** said method comprises steps: mixing metal iron or a metal iron-containing composition and a compound of chromium 6+ or an aqueous solution thereof and an aqueous solution of nitric acid with the initial concentration of 6.0-46 mass% at a temperature lower than 40°C; air bubbling the resulting mixture at a temperature of 40-60°C, mixing the resulting solution and an aqueous solution of ammonium and/or potassium and/or sodium carbonate and/or hydroxide, washing off the precipitate from the mother solution with water, precipitate filtration and drying.

5. The method according to claim 4 **characterized in that** said method comprises further adding the mixture of compounds of iron, chromium and nitric acid with compounds of Cu²⁺ or an aqueous solution thereof.

6. The method according to claim 4 **characterized in that** the metal iron-containing composition is cast iron or steel.

7. The method according to claim 4 or 5 **characterized in that** said method comprises a step of baking the catalyst at a temperature of 150-250°C in an air stream and/or at 150-450°C in an inert gas stream of nitrogen, or a mixture thereof with vapour.

8. The method according to claim 7 **characterized in that** said method further comprises steps of mixing the precipitate with graphite and molding or pelletizing.

9. A method of vapour conversion of carbon monoxide using an iron and chromium-containing catalyst **characterized in that** said method uses the catalyst according to claims 1 to 3.

10. The method of vapour conversion of carbon monoxide according to claim 9 **characterized in that** said method comprises implementing in a range of temperatures greater than 250°C.
